# EUROPEAN PATENT SPECIFICATION

(11) **EP 2 690 226 B1**
(45) Date of publication and mention of the grant of the patent: **21.05.2014**
(21) Application number: 12005471.3
(22) Date of filing: 27.07.2012
(51) Int. Cl.: E03B 9/02, E03B 9/04, E03B 9/08, F16K 27/00

(54) **Hydrant valve**
Hydrantenventil
Vanne de prise d'eau

(43) Date of publication of application: 29.01.2014
(73) Proprietor: IMP ARMATURE d.o.o., 1295 Ivancna Gorica (SI)
(72) Inventor: Babic, Boris, 1312 Videm-Dobrepolje (SI)
(74) Representative: Borstar, Dusan

(56) References cited:
- WO-A1-2011/077092
- DE-A1- 19 858 515
- DE-C- 723 918
- DE-U1-202004 014 878
- GB-A- 2 443 012
- GB-A- 190 900 866
- US-A- 4 127 142
- US-A- 5 218 987

## Description

The present invention is directed to a hydrant valve according to the preamble of claim 1.

The purpose of the present invention is based on a problem, how to create a hydrant valve, which should consist of a small number of simple components, and should despite to that enable on the one hand reliable sealing of each disposable pipeline connected thereto and on the other hand also connecting of devices for accessing the interior of each pipeline for the purposes of inspection and supervision of the pipeline interior, in particular of cameras, microphones or the like, regardless to the fact that the pipeline is filled with media. The technical problem to be solved by the present invention is to provide an hydrant valve allowing a more easily accessibility of the hydrant.

A hydrant a such is described in RO 117030 B and comprises a casing, which is by means of a flange connected to each disposable pipeline, which enables each desired flow of each desired media, in particular of water, and in addition to said flange also an outlet opening, which is intended for discharging said media, and moreover also a valve disc, which is mounted within said casing and is intended to enable or to interrupt the flow throughout said casing and consequently the flow throughout said outlet opening. Such hydrant is intended merely to enable or to interrupt flowing of each media out from the pipeline and can be used in irrigation systems or by filling of bulky containers like truck tanks, or also in public fire extinguishing systems, however, it does not enable introducing of probes or similar inspecting appliances until the pipeline is filled with the media. Hydrant valves, which enable optionally a controlled discharging of media from pipelines having a diameter of at least 80 mm, or introducing probes or similar devices for inspecting or supervision of the interior of each pipeline into such pipeline, are commercially available and are disclosed e.g. in the commercial catalogues of *AVK UK Limited* (*www.avkuk.co*.*uk*) and *VIKING JOHNSON* (*www.vikingjohnson.com* or *www.craneco.com*).

The hydrant valve manufactured by *AVK UK Limited* comprises a casing, which is by means of a flange surrounding an intake opening at the one end portion connectable to each disposable pipeline. An outlet opening is available on the other end portion and extends coaxially with said intake opening and can be closed by means of a cover. A sealing passage is available between said openings, by which a planar valve disc is cooperating in the sense of resting thereon. Whenever said valve disc is rest on said passage, then the valve is closed and the media flow throughout the valve is blocked. Whenever said valve disc is maintained apart from said passage, the valve is open and either the flow or introducing a probe or a similar device for inspecting the interior of the pipeline throughout the casing is enabled. By taking into consideration the direction of a longitudinal geometric axis throughout said intake and outlet opening, a sealing seat in the passage is inclined with respect to said axis, while the sealing disc is arranged pivotally around its pivoting axis, which extends transversally with respect to the previously mentioned longitudinal axis. At certain distance apart from said pivoting axis, said sealing disc is supported by means of a lever, which is pivotally connected to a nut of a spindle, which is embedded within a supplemental casing, which is surmounted to the previously mentioned casing, and the spindle extends along an axis, which is directed parallel to the previously mentioned axis throughout said openings. By turning said spindle, the nut is displaced along the axis of the spindle, by which also said lever is displaced, by which then the valve disc is pivoted around its pivoting axis. When considering just a plurality of axis, manufacturing of such casing appears to be extremely difficult, and moreover, also the previously mentioned parts must be very precisely manufactured. When the valve is closed, the valve disc is by means of the lever pressed towards the sealing seat within said passage opposite to the force which is generated by the pressure of media within the pipeline, and besides, due to the inclined position of the sealing disc, only a minor component of the force, which is generated by means of said spindle and the nut, can be used to this aim. Any gap among the components, which can e.g. result from wearing, normally leads to insufficient sealing of the valve and to leakage.

Analogous concept of the VIKING JOHNSON valve also provides a casing with an intake opening, which s surrounded with a flange, as well as an outlet opening, which can be closed with a cover. Said openings are arranged coaxial to each other, and a passage with a sealing seat is arranged there-between, which can be blocked or released by means of a hemispheric valve member, which is able to rotate around its pivoting axis by means of a worm gear. A corresponding worm is embedded within a supplemental casing, which is surmounted to the previously mentioned casing, and is adapted to cooperate with a worm gear, which is attached on a shaft, which is interconnected with said valve member. The sealing capability of such valve appears to be improved, but the technology of manufacturing appears to be even much more complicated than the previously described one.

A hydrant valve is disclosed in DE 198 58 515 A, which is considered the closest prior art, and which comprises a casing with an intake opening, which is surrounded with a flange intended for interconnection between said casing and each corresponding pipeline through which each media can flow, as well as with an outlet opening, which is foreseen for introducing a probe or a similar device for inspecting and/or supervision of the interior of said pipeline. A sealing passage is foreseen within the casing between said openings and can be due to blocking/releasing the flow of each media or also for the purposes of introducing the probe throughout the valve towards the interior of each pipeline either blocked or released by means of a valve disc, which is on the one hand adapted to be rest on said sealing passage for the purposes of sealing the valve, and on the other hand to be removed away the area of said sealing passage at least in such extent that each probe or a similar device for inspecting the interior of the pipeline can be introduced throughout said sealing passage. The valve also comprises a spindle or similar device for controlled displacing of the valve disc either to be rest on said sealing passage, or to be removed away from said sealing passage. The valve disc is displaceable into the area of the sealing passage, and optionally also away from said area, by means of a spindle, which is embedded within the casing and can be rotated around its longitudinal axis, which extends parallel to said geometric axis of the outlet opening, and at least a part of said spindle protrudes outside from said casing.

DE 20 2004 014878 U1 refers to a hydrant valve with a casing in which an intake opening and an outlet opening are at least approximately coaxially aligned in the longitudinal geometrical axis of said outlet opening. A sealing passage, which is adapted to cooperate with a valve disc, is located adjacent to the outlet opening. An additional chamber is foreseen within the casing between said sealing passage and the intake opening, and is sufficiently deflected to receive a valve disc when it is displaced in the direction transversally with respect to said axis away from the area of the sealing passage at least in such extent that a probe or a similar device for inspecting the interior of the pipeline can be introduced throughout the sealing passage.

Also US 4 127 142 A and WO 2011/077092 disclose hydrant valves, which allow access to the hydrant for inspection or for insertion of a probe.

The invention refers to a hydrant valve, which comprises a casing with an intake opening, which is surrounded with a flange intended for interconnection between said casing and each corresponding pipeline through which each media can flow, as well as with an outlet opening, which is foreseen for introducing a probe or a similar device for inspecting and/or supervision of the interior of said pipeline. A sealing passage is foreseen within the casing between said openings and can be due to blocking/releasing the flow of each media or also for the purposes of introducing the probe throughout the valve towards the interior of each pipeline either blocked or released by means of a valve disc, which is on the one hand adapted to be rest on said sealing passage for the purposes of sealing the valve, and on the other hand to be removed away the area of said sealing passage at least in such extent that each probe or a similar device for inspecting the interior of the pipeline can be introduced throughout said sealing passage. Such valve also comprises a spindle or similar device for controlled displacing of the valve disc either to be rest on said sealing passage, or to be removed away from said sealing passage.

The present invention proposes a hydrant valve, by which the previously defined problem is resolved by means of features, which are included in the independent and dependent claims. The invention provides that the casing is conceived in such a manner that the intake opening and an outlet opening are at least approximately coaxially aligned in the longitudinal geometrical axis of the outlet opening, wherein the sealing passage, which is adapted to cooperate with the valve disc, is located adjacent to the outlet opening, and between said sealing passage and the intake opening an additional chamber is foreseen within the casing, which is sufficiently deflected to receive a valve disc when it is displaced in the direction transversally with respect to said axis away from the area of the sealing passage at least in such extent that a probe or a similar device for inspecting the interior of the pipeline can be introduced throughout the sealing passage. At the same time the valve disc is displaceable into the area of the sealing passage, and optionally also away from said area, by means of a spindle, which is embedded within the casing and can be rotated around its longitudinal axis extending parallel to said geometric axis of the outlet opening, and at least a part of said spindle protrudes outside from said casing. Besides, a nut is mounted on the spindle and is by turning said spindle around its longitudinal axis displaced along said axis, wherein a lever in the form of cantilever is attached to said nut and bears the valve disc on its free end portion, such that said lever is together with the nut displaceable along said axis of the spindle, but at the same time the lever can be freely pivoted relative to the nut and independently with regard to rotation of said nut around said longitudinal axis of the spindle.

In a preferred embodiment of the invention, the sealing passage is furnished with a conical sealing seat, which converges in a direction from the intake opening towards the outlet opening, and the valve disc is also furnished with a conical sealing seat, which also converges in a direction from the intake opening towards the outlet opening, and by means of which the valve disc is insertable into said sealing passage for the purposes of sealing thereof. In this, the valve disc is pressed towards the sealing passage in a direction, in which the pressure is acting, which is available within the casing, when the valve is hydraulically interconnected with each corresponding pipeline.

In a still further embodiment of the invention, a guiding inclination is foreseen within the casing between the intake opening and the sealing passage, and is adapted to cooperate with the handle in the sense of automatically successive pivoting the handle together with the valve disc attached thereon from the first position, in which the valve disc is rest on the sealing passage, into the second position, in which the valve disc is pivoted into the additional chamber, or vice versa.

The invention will be described by means of an embodiment, which is presented in the attached drawing, where
Fig. 1 is a top view of a hydrant valve according to the invention;
Fig. 2 is hydrant valve in its opened state, presented in a cross-section along the plane A - A according to Fig. 1; and
Fig. 3 is hydrant valve in its closed state, presented in a cross-section along the plane A - A according to Fig. 1.

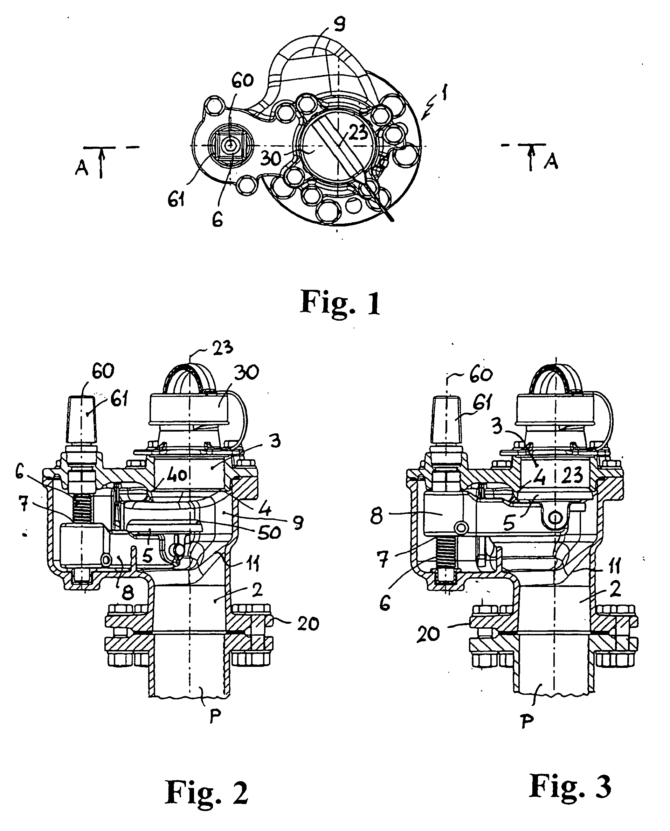

A hydrant valve comprises a casing 1 (Fig. 1), which is furnished with an inlet opening 2, which is surrounded with a flange 20 intended for interconnection of said casing 1 with each disposable pipeline P, as well as with an outlet opening 3, which can be either closed by a cover 30, or to which a device (not shown) for inspecting or supervision of the interior of said pipeline P can be attached.

Said openings 2, 3 are generally arranged coaxially with respect to each other, by which their common axis 23, more precisely at least a longitudinal axis of the outlet opening 3, defines a longitudinal geometric axis of the casing 1 and also a direction of the flow of the media, which is available within said pipeline P.

A sealing passage 4 is foreseen within the casing 1 between said openings 2, 3 and is adapted to cooperate with a valve disc 5.

Regarding the shown embodiment, the sealing passage 4 is located just below the outlet opening 3 and comprises a conical sealing seat 40, which converges in a direction from the intake opening 2 towards the outlet opening 3 of the casing 1. Quite analogously, the valve disc 5 is furnished with a conical sealing seat 50, which also converges essentially in a direction from the intake opening 2 towards the outlet opening 3 of the casing 1.

A spindle 6 is also arranged within the casing 1, and comprises an actuating end portion 61, which protrudes outside from said casing 1 and is in this particular embodiment square in profile in order to enable transmission of torque from outside onto said spindle 6 for the purposes of turning the spindle 6 around its longitudinal axis 60 extending essentially parallel to the previously mentioned axis 23. A nut 7 or a similar threaded bush is placed on said spindle 6 and is by turning the spindle 6 displaced along its longitudinal axis 60.

The valve disc 5 is attached in the free end portion of a lever 8 in the form of cantilever, which is interconnected with said nut 7 on the spindle 6 in such a manner that the handle 8 is displaceable along said geometric axis 60 of the spindle 6, but at the same time it can be freely pivoted relatively to said nut around said geometric axis 60 of the spindle 6. The nut 7 is therefore embedded within said handle 8, that the handle 8 can be pivoted relative to the nut 7 around said longitudinal geometric axis 60 of the spindle, si that by turning the spindle 6 the nut 7 is displaced along the axis 60 together with the handle 8 and the valve disc 5, by which the handle 8 may relative to the nut 7 be either be maintained in certain position, or may also independently of the nut 7 be pivoted at certain angle around said axis 60 of the spindle 6 or the nut 7.

The invention moreover provides that the casing 1 is furnished with an additional extension or chamber 9, which is projecting in the transversal direction with respect to said axis 23 and which allows displacement of the valve disc 5 in the transversal direction with respect to said axis 23 in such extend that said valve disc 5 is completely positioned outside of the sealing passage 4 and the sealing seat 40 adjacent to said outlet opening 3, which can be achieved by means of said handle 8, when it is pivoted relative to said nut 7 on the spindle 6 around the axis 60 of the spindle 6.

A further embodiment f the invention provides that and inclination 11 is foreseen within the casing 1, which is adapted to cooperate with the handle 8 in such a manner that the handle 8 may slide along said inclination 11, when the nut 7 and the handle 8 are displaced along the axis 60. Consequently, in the closed state of the valve (Fig. 39, the handle 8 is rest in the top area of said inclination and is pivoted around the axis 60 in such a manner that the valve disc 5 is coaxially aligned with the outlet opening 3. When the spindle 6 is rotated and the nut 7 is together with said handle 8 and the valve disc 5 displaced along the axis 60, the handle 8 is sliding along said inclination 11 and is guided therewith in order to be successively pivoted around the axis 60, by which the valve disc 5 is successively removed from its coaxially aligned position towards the chamber 9 in the casing 1.

It must however be expressly annotated that the valve may also operate without the presence of said inclination 11. Due to appropriate defining a thread on the spindle 6 and the nut 7 it can be also achieved that by turning the spindle 6 and displacing the nut 7 thanks to the friction between the spindle 6 and the nut and the handle 8, the handle 8 shows a tendency of pivoting exactly in such direction, in which the valve disc 5 needs to be displaced in order to be removed into said additional chamber 9 for the purposes of enabling introduction of a probe or a similar device throughout the outlet opening 3 towards the interior of the pipeline P.

It should also be noted that due to arrangement of the sealing passage 4 just below the outlet opening 3 the sealing capability of the valve disc 5 is perfect, since the pressing thereof towards the sealing seat 40 is also supported by the pressure, which is available within each pipeline P and also within the casing 1 of the valve according to the invention.

## Claims

1. Hydrant valve, comprising a casing (1) with an intake opening (2), which is surrounded with a flange (20) intended for interconnection between said casing (1) and each corresponding pipeline (P) through which each media can flow, as well as with an outlet opening (3), which is foreseen for introducing a probe or a similar device for inspecting and/or supervision of the interior of said pipeline (P), wherein a sealing passage (4) is foreseen within the casing (1) between said openings (2, 3) and can be due to blocking/releasing the flow of each media or also for the purposes of introducing the probe throughout the valve towards the interior of each pipeline either blocked or released by means of a valve disc (5), which is on the one hand adapted to be rest on said sealing passage (4) for the purposes of sealing the valve, and on the other hand to be removed away the area of said sealing passage (4) at least in such extent that each probe or a similar device for inspecting the interior of the pipeline (P) can be introduced throughout said sealing passage (4), wherein the valve also comprises a spindle (6) or similar device for controlled displacing of the valve disc (5) either to be rest on said sealing passage (4), or to be removed away from said sealing passage (4),
and wherein the valve disc (5) is displaceable into the area of the sealing passage (4), and optionally also away from said area, by means of a spindle (6), which is embedded within the casing (1) and can be rotated around its longitudinal axis (60) extending parallel to said geometric axis (23) of the outlet opening (3), and at least a part (61) of said spindle (6) protrudes outside from said casing (1),
**characterized in that**
the casing (1) is conceived in such a manner that the intake opening (2) and an outlet opening (3) are at least approximately coaxially aligned in the longitudinal geometrical axis (23) of the outlet opening (3);
**and in that** the sealing passage (4), which is adapted to cooperate with the valve disc (5), is located adjacent to the outlet opening (3),
and between said sealing passage (4) and the intake opening (2) an additional chamber (9) is foreseen within the casing (1), which is sufficiently deflected to receive the valve disc (5) when it is displaced in the direction transversally with respect to said axis (23) away from the area of the sealing passage at least in such extent that a probe or a similar device for inspecting the interior of the pipeline (P) can be introduced throughout the sealing passage (4);
**and in that** a nut (7) is mounted on the spindle (6) and is by turning said spindle (6) around its longitudinal axis (6) displaced along said axis (60),
wherein a lever (8) in the form of cantilever is attached to said nut (7) and bears the valve disc (5) on its free end portion, such that said lever (8) is together with the nut (7) displaceable along said axis (60) of the spindle (6), but at the same time the lever (8) can be freely pivoted relative to the nut (7) and independently with regard to rotation of said nut (7) around said longitudinal axis (60) of the spindle (6).

2. Valve according to Claim 1, **characterized in that** the sealing passage (4) is furnished with a conical sealing seat (40), which converges in a direction from the intake opening (2) towards the outlet opening (3), and the valve disc (5) is also furnished with a conical sealing seat (50), which also converges in a direction from the intake opening (2) towards the outlet opening (3), and by means of which the valve disc (5) is insertable into said sealing passage (4) for the purposes of sealing thereof.

3. Valve according to Claim 1, **characterized in that** the valve disc (5) is pressed towards the sealing passage (4) in a direction, in which the pressure is acting, which is available within the casing (1), when the valve is hydraulically interconnected with each corresponding pipeline (P).

4. Valve according to anyone of the preceding Claims, **characterized in that** a guiding inclination is foreseen within the casing (1) between the intake opening (2) and the sealing passage (4), and is adapted to cooperate with the handle (8) in the sense of automatically successive pivoting the handle (8) together with the valve disc (5) attached thereon from the first position, in which the valve disc (5) is rest on the sealing passage (4), into the second position, in which the valve disc (5) is pivoted into the additional chamber (9), or vice versa.

## Patentansprüche

1. Hydrantenventil, aufweisend ein Gehäuse (1) mit einer Einlassöffnung (2), die von einem Flansch (20) umgeben ist, zur Verbindung zwischen dem Gehäuse (1) und jeder entsprechenden Rohrleitung (P), durch welche jedes Medium fließen kann, sowie mit einer Auslassöffnung (3), die zum Einbringen einer Sonde oder einer ähnlichen Vorrichtung zur Untersuchung und/oder Überwachung des Inneren der Rohrleitung (P) vorgesehen ist, wobei zwischen den Öffnungen (2, 3) innerhalb des Gehäuses (1) ein Dichtungsdurchgang (4) vorgesehen ist, der für das Absperren/Freigeben des Flusses jedes Mediums oder auch für den Zweck des Einbringens der Sonde durch das gesamte Ventil ins Innere jeder Rohrleitung, die durch eine Ventilplatte (5) entweder abgesperrt oder freigegeben ist, zuständig sein kann, wobei die Ventilplatte (5) einerseits dazu geeignet ist, zum Zwecke des Abdichtens des Ventils auf dem Ventildurchgang (4) zu ruhen und andererseits zumindest soweit von dem Bereich des Dichtungsdurchgangs (4) entfernt zu werden, dass jede Sonde oder eine ähnliche Vorrichtung zur Untersuchung des Inneren der Rohrleitung (P) durch den gesamten Dichtungsdurchgang (4) eingebracht werden kann, wobei das Ventil auch eine Spindel (6) oder eine ähnliche Vorrichtung zur gesteuerten Verlagerung der Ventilplatte (5) aufweist, so dass sie entweder auf dem Dichtungsdurchgang (4) ruht oder von dem Dichtungsdurchgang (4) entfernt wird,
und wobei die Ventilplatte (5) in den Bereich des Dichtungsdurchgangs (4) und gegebenenfalls auch von dem Bereich weg verlagert werden kann, und zwar mittels einer Spindel (6), die in dem Gehäuse (1) eingebettet ist und um ihre Längsachse (60) gedreht werden kann, die sich parallel zu der Geometrieachse (23) der Auslassöffnung (3) erstreckt, und zumindest ein Teil (61) der Spindel (6) aus dem Gehäuse (1) herausragt,
**dadurch gekennzeichnet, dass**
das Gehäuse (1) derart konfiguriert ist, dass die Einlassöffnung (2) und eine Auslassöffnung (3) zumindest in etwa koaxial in der geometrischen Längsachse (23) der Auslassöffnung (3) fluchten;
und dass der Dichtungsdurchgang (4), der dazu geeignet ist, mit der Ventilplatte (5) zusammenzuwirken, sich angrenzend an die Auslassöffnung (3) befindet,
und zwischen dem Dichtungsdurchgang (4) und der Einlassöffnung (2) eine zusätzliche Kammer (9) innerhalb des Gehäuses (1) vorgesehen ist, die ausreichend gewölbt ist, um die Ventilplatte (5) aufzunehmen, wenn sie in Richtung quer zu der Achse (23) weg von dem Bereich des Dichtungsdurchgangs zumindest soweit verlagert wird, dass eine Sonde oder eine ähnliche Vorrichtung zur Untersuchung des Inneren der Rohrleitung (P) durch den gesamten Dichtungsdurchgang (4) eingebracht werden kann;
und dass eine Mutter (7) auf der Spindel (6) angebracht ist und durch Drehen der Spindel (6) um ihre Längsachse (6) entlang der Achse (60) verlagert wird,
wobei ein Hebel (8) in Form eines freitragenden Hebels an der Mutter (7) angebracht ist und an seinem freien Endabschnitt die Ventilplatte (5) trägt, so dass der Hebel (8) zusammen mit der Mutter (7) entlang der Achse (60) der Spindel (6) verlagert werden kann, aber der Hebel (8) gleichzeitig relativ zu der Mutter (7) und unabhängig von der Drehung der Mutter (7) um die Längsachse (60) der Spindel (6) frei verschwenkt werden kann.

2. Ventil nach Anspruch 1, **dadurch gekennzeichnet, dass** der Dichtungsdurchgang (4) mit einem konischen Dichtungssitz (40) versehen ist, der in eine Richtung von der Einlassöffnung (2) zu der Auslassöffnung (3) konvergiert, und die Ventilplatte (5) auch mit einem konischen Dichtungssitz (50) versehen ist, der auch in eine Richtung von der Einlassöffnung (2) zu der Auslassöffnung (3) konvergiert, und durch den die Ventilplatte (5) in den Dichtungsdurchgang (4) zu dessen Abdichtung eingeführt werden kann.

3. Ventil nach Anspruch 1, **dadurch gekennzeichnet, dass** die Ventilplatte (5) in eine Richtung gegen den Dichtungsdurchgang (4) gepresst wird, in die der in dem Gehäuse (1) herrschende Druck wirkt, wenn das Ventil hydraulisch mit jeder entsprechenden Rohrleitung (P) verbunden ist.

4. Ventil nach einem der vorhergehenden Ansprüche, **dadurch gekennzeichnet, dass** eine Führungsneigung innerhalb des Gehäuses (1) zwischen der Einlassöffnung (2) und dem Dichtungsdurchgang (4) vorgesehen und dazu geeignet ist, dahingehend mit dem Griff (8) zusammenzuwirken, dass der Griff (8) automatisch nacheinander zusammen mit der an diesem angebrachten Ventilplatte (5) von der ersten Position, in der die Ventilplatte (5) auf dem Dichtungsdurchgang (4) ruht, in die zweite Position verschwenkt wird, in der die Ventilplatte (5) in die zusätzliche Kammer (9) verschwenkt wird, oder umgekehrt.

## Revendications

1. Vanne de bouche d'incendie, comprenant un carter (1) comportant une ouverture d'admission (2), qui est entourée d'une bride (20) destinée au raccordement entre ledit carter (1) et chaque canalisation (P) correspondante à travers laquelle chaque milieu peut s'écouler, et comportant également une ouverture de sortie (3), qui est prévue pour introduire une sonde ou un dispositif similaire pour l'inspection et/ou la surveillance de l'intérieur de ladite canalisation (P), dans laquelle un passage d'étanchéité (4) est prévu à l'intérieur du carter (1) entre lesdites ouvertures (2, 3) et peut servir à bloquer/débloquer l'écoulement de chaque milieu ou également à introduire la sonde à travers la vanne vers l'intérieur de chaque canalisation, bloquée ou débloquée par l'intermédiaire d'un clapet de vanne (5), qui est d'une part conçu pour reposer sur ledit passage d'étanchéité (4) en vue d'étanchéifier la vanne, et d'autre part pour être écarté de la zone dudit passage d'étanchéité (4), au moins dans une mesure où chaque sonde ou dispositif similaire pour inspecter l'intérieur de la canalisation (P) peut être introduit dans ledit passage d'étanchéité (4), dans laquelle la vanne comporte en outre une tige (6) ou un dispositif similaire pour le déplacement contrôlé du clapet de vanne (5) soit pour qu'il repose sur ledit passage d'étanchéité (4), soit pour qu'il soit écarté dudit passage d'étanchéité (4),
et dans laquelle le clapet de vanne (5) peut être déplacé dans la zone du passage d'étanchéité (4), et éventuellement également écart de ladite zone, au moyen d'une tige (6), qui est intégrée dans le carter (1) et qui peut être entraînée en rotation autour de son axe longitudinal (60) s'étendant parallèlement audit axe géométrique (23) de l'ouverture de sortie (3), et au moins une partie (61) de ladite tige (6) fait saillie à l'extérieur dudit carter (1),
**caractérisée en ce que**
le carter (1) est conçu d'une manière telle que l'ouverture d'admission (2) et une ouverture de sortie (3) sont au moins approximativement alignées coaxialement dans l'axe géométrique longitudinal (23) de l'ouverture de sortie (3) ;
et **en ce que** le canal d'étanchéité (4), qui est conçu pour coopérer avec le clapet de vanne (5), est situé de manière adjacente à l'ouverture de sortie (3),
et entre ledit passage d'étanchéité (4) et l'ouverture d'admission (2), une chambre supplémentaire (9) est prévue à l'intérieur du carter (1), qui est suffisamment déviée pour recevoir le clapet de vanne (5) quand il est déplacé dans la direction transversale par rapport audit axe (23) à l'écart de la zone du passage d'étanchéité, au moins dans une mesure où une sonde ou un dispositif similaire pour inspecter l'intérieur de la canalisation (P) peut être introduit à travers le passage d'étanchéité (4) ;
et **en ce qu'**un écrou (7) est monté sur la tige (6) et est déplacé, en tournant ladite tige (6) autour de son axe longitudinal (6), le long dudit axe (60),
dans laquelle un levier (8) sous la forme d'un cantilever est fixé audit écrou (7) et porte le clapet de vanne (5) sur sa partie d'extrémité libre, de sorte que ledit levier (8) peut être déplacé, conjointement avec l'écrou (7), le long dudit axe (60) de la tige (6), mais en même temps le levier (8) peut pivoter librement par rapport à l'écrou (7) et de façon indépendante par rapport à la rotation dudit écrou (7) autour dudit axe longitudinal ( 60) de la tige (6).

2. Vanne selon la revendication 1, **caractérisée en ce que** le passage d'étanchéité (4) est muni d'un siège d'étanchéité conique (40), qui converge dans une direction allant de l'ouverture d'admission (2) vers l'ouverture de sortie (3), et le clapet de vanne (5) est également muni d'un siège d'étanchéité conique (50), qui converge également dans une direction allant de l'ouverture d'admission (2) vers l'ouverture de sortie (3), et au moyen duquel le clapet de vanne (5) peut être inséré dans ledit passage d'étanchéité (4) en vue d'étanchéifier celui-ci.

3. Vanne selon la revendication 1, **caractérisée en ce que** le clapet de vanne (5) est pressé en direction du passage d'étanchéité (4) dans une direction dans laquelle agit la pression, qui est (1) disponible au sein du carter, lorsque la vanne est raccordée hydrauliquement à chaque canalisation (P) correspondante.

4. Vanne selon l'une quelconque des revendications précédentes, **caractérisée en ce qu'**une inclinaison de guidage est prévue à l'intérieur du carter (1) entre l'ouverture d'admission (2) et le passage d'étanchéité (4), et est conçue pour coopérer avec la poignée (8) en vue de faire pivoter automatiquement la poignée (8) de manière successive conjointement avec le clapet de vanne (5) fixé sur celle-ci à partir de la première position, dans laquelle le clapet de vanne (5) repose sur le passage d'étanchéité (4), vers la deuxième position, dans laquelle le clapet de vanne (5) a pivoté dans la chambre supplémentaire (9), ou vice versa.
